# EUROPÄISCHE PATENTSCHRIFT

(11) **EP 3 507 516 B1**
(45) Veröffentlichungstag und Bekanntmachung des Hinweises auf die Patenterteilung: **16.06.2021**
(21) Anmeldenummer: 17757536.2
(22) Anmeldetag: 24.08.2017
(51) Int. Cl.: F16C 33/76, F16J 15/34

(54) **WÄLZLAGER UND VERFAHREN ZUM ABDICHTEN EINES WÄLZLAGERS**
ROLLING BEARING AND METHOD FOR SEALING A ROLLING BEARING
PALIER À ROULEMENT ET PROCÉDÉ D'ÉTANCHÉIFICATION D'UN PALIER À ROULEMENT

(30) Priorität: 02.09.2016 DE 102016116476
(43) Veröffentlichungstag der Anmeldung: 10.07.2019
(73) Patentinhaber: thyssenkrupp rothe erde Germany GmbH, 44137 Dortmund (DE); thyssenkrupp AG, 45143 Essen (DE)
(72) Erfinder: ROLLMANN, Jörg, 59558 Lippstadt (DE); ROTHFELD, Andre, 33397 Rietberg (DE); DRÖGE, Michael, 33142 Büren (DE); SCHNIEDER, Stefan, 59558 Lippstadt (DE)
(74) Vertreter: thyssenkrupp Intellectual Property GmbH
(86) Internationale Anmeldenummer: PCT/EP2017/071284
(87) Internationale Veröffentlichungsnummer: WO 2018/041700

(56) Entgegenhaltungen:
- DE-U1- 20 017 157
- DE-U1-202014 003 963
- JP-A- 2006 105 297
- JP-A- 2007 113 759
- JP-A- 2008 223 842
- US-A1- 2011 278 851

## Beschreibung

### Stand der Technik

Die Erfindung betrifft ein Wälzlager und ein Verfahren zum Abdichten eines Wälzlagers.

Wälzlager sind hinlänglich bekannt. Sie werden beispielsweise in Windkraftanlagen zur Rotorlagerung verwendet, wie es z.B. in der Druckschrift DE 10 2010 026 649 A1 offenbart ist. Typischerweise umfasst ein Wälzlager ein erstes Ringelement und ein zweites Ringelement, wobei das erste Ringelement gegenüber dem zweiten Ringelement um eine Drehachse drehbar gelagert ist. Für ein möglichst reibungsarmes Lagern werden Wälzkörper verwendet, die zwischen dem ersten Ringelement und dem zweiten Ringelement angeordnet sind. Dabei wird das reibungsarme Abwälzen der Wälzkörper durch ein Schmiermittel unterstützt. Um ein Austreten des Schmiermittels aus dem Wälzlager zu unterbinden, kennt der Stand der Technik Dichtelemente, beispielsweise Radialwellendichtungen.

Auch wenn sich unmittelbar nach Fertigung des Wälzlagers mit eingebauter Radialwellendichtung eine ausreichende Abdichtung feststellen lässt, können im Betrieb des Wälzlagers, beispielsweise in einer Windkraftanlage, nicht zu vernachlässigende Schmiermittelverluste auftreten, die einen dauerhaften reibungslosen Einsatz des Wälzlagers verhindern.

Aus der Druckschrift US 2011/278851 A1 ist ein Wälzlager mit den Merkmalen des Oberbegriffs von Anspruch 1 bekannt. Der Innenraum des Wälzlagers wird mit einem unter Druck stehenden Fluid, z.B. Druckluft, beaufschlagt. Zur Erzeugung der Druckluft ist ein Kompressor vorgesehen. Dass eine Regeleinrichtung zur Regelung des Druckgases im Innenraum vorhanden sein muss, ist der Beschreibung der US 2011/278851 A1 implizit zu entnehmen, denn es wird z.B. in den Absätzen [0050] und [0051] ausgeführt, dass der Kompressor nicht ständig in Betrieb sein muss, sondern dass er nur zeitweise, d.h. mit Unterbrechungen betrieben werden kann, wenn mit der von dem Kompressor erzeugten Druckluft ein Druckspeicher gefüllt wird, aus dem bei Bedarf Druckluft in den Innenraum nachfüllt wird, um einen vorgegebenen Solldruck aufrecht zu erhalten.

### Offenbarung der Erfindung

Es ist eine Aufgabe der vorliegenden Erfindung, ausgehend von dem vorstehend beschriebenen Stand der Technik die Abdichtung des Wälzlagers zu verbessern. Die vorliegende Erfindung löst die Aufgabe durch ein Wälzlager mit den Merkmalen des Patentanspruchs 1.

Das erfindungsgemäß in den Innenraum gezielt eingebrachte Druckgas sorgt dafür, dass die Dichtwirkung im Betrieb bei Bedarf sichergestellt werden kann. Dies erweist sich insbesondere insofern als vorteilhaft, als dass überlastbedingte Verformungen zwischen dem ersten Ringelement und dem zweiten Ringelement und eine sich daraus ergebende Aufhebung der Abdichtung kompensiert werden können, wodurch letztendlich ein ungewollter Schmiermittelverlust vermieden werden kann. Dies wird z. B. dann notwendig, wenn hohe Betriebslasten auf das erste und das zweite Ringelement wirken, die zu einer so großen Aufweitung eines Spaltes zwischen den Ringelementen führen, dass dieser Spalt durch das Dichtelement nicht länger überbrückt werden kann. Mittels des Druckgases lässt sich das Dichtelement oder ein Teil des Dichtelements in eine Dichtstellung überführen, in der zumindest ein Teil des Dichtelements am zweiten Ringelement dichtend anliegt, auch wenn die auf das zweite Ringelement wirkende Last im Betrieb zu einer Relativverschiebung gegenüber dem ersten Ringelement führt. Darüber hinaus können alterungsbedingt nachlassende Dichtkräfte des Dichtelements durch den gezielten Einsatz des Druckgases kompensiert werden.

Erfindungsgemäß ist vorgesehen, dass das Wälzlager ein in Wirkverbindung mit dem Innenraum stehendes Druckgasventil aufweist. Durch das Druckgasventil lässt sich in vorteilhafter Weise ein unerwünschter Überdruck im Innenraum vermeiden, indem das Druckgasventil für einen im Innenraum herrschenden Überdruck unterhalb eines festgelegten kritischen Druckwerts verschlossen bleibt und der Innenraum entlüftet wird, sobald der Überdruck im Innenraum den kritischen Druckwert überschreitet. Dabei verschließt das Druckgasventil im Anschluss an einen durch das Entlüften veranlassten Druckabfall und es wird der gewünschte Sollwert für den Überdruck eingestellt. Bei der Verwendung von Druckgasventilen ist es denkbar, dass diese in eine oder mehrere der Aussparungen zur Kontrolle des Überdrucks eingelassen sind. Vorzugsweise weist das Druckgasventil an seiner Seite eine Öffnung auf, über die Luft im geöffneten Zustand des Druckgasventils entweichen kann.

Weiterhin ist erfindungsgemäß vorgesehen, dass das Druckgasventil derart gestaltet ist, dass in einem geöffneten Zustand des Druckgasventils neben entweichendem Gas auch ein Schmiermittel aus dem Innenraum austritt. In einer vorteilhaften Ausführungsform ist es vorgesehen, dass das Schmiermittel mittels eines Trichters in einem Reservoir aufgefangen wird und beispielsweise zur Wiederverwertung über einen Kreislauf dem Wälzlager zurückgeführt wird.

Beispielsweise handelt es sich bei dem Wälzlager um ein Großwälzlager, dessen Außendurchmesser größer ist als 1 m. Ferner ist es vorgesehen, dass das erste Ringelement gegenüber dem zweiten Ringelement um eine Drehachse drehbar gelagert ist, wobei die Lagerung durch Wälzkörper innerhalb des Innenraums unterstützt wird. Um das Abwälzen zu erleichtern, ist der Innenraum zumindest teilweise mit einem Schmiermittel gefüllt. Weiterhin ist es vorgesehen, dass das Dichtelement umlaufend ausgestaltet ist. Ein konkretes Beispiel für ein Dichtelement ist eine Wellendichtung bzw. Radialwellendichtung. Ferner ist es vorstellbar, dass das erste Ringelement oder das zweite Ringelement mehrteilig ausgestaltet sind. Beispielsweise handelt es sich bei dem ersten Ringelement um einen Außenring und bei dem zweiten Ringelement um einen Innenring. Denkbar ist ferner, dass das Dichtelement am ersten Ringelement durch eine kraft-, form- oder stoffschlüssige Verbindung befestigt ist. Vorzugsweise ist das Dichtungselement in einer Vorkammer des Innenraums angeordnet. Zur Begrenzung des Drucks im Innenraum wird insbesondere ein Druckgasventil vorgeschlagen, welches geeignet ist, überschüssige Medien aus dem Lagerinnenraum abzuführen und so den durch das Druckgas erzeugten Druck zu begrenzen

Vorteilhafte Ausgestaltungen und Weiterbildungen der Erfindung sind den Unteransprüchen sowie der Beschreibung unter Bezugnahme auf die Zeichnungen entnehmbar.

Gemäß einer weiteren Ausführungsform der vorliegenden Erfindung ist vorgesehen, dass das Wälzlager wenigstens ein Anschlusselement zur Einleitung von Druckgas, insbesondere zur Einleitung von Druckgas in den Innenraum des Wälzlagers, aufweist. Grundsätzlich ist unter einem Anschlusselement eine Vorrichtung und/oder eine Ausgestaltung der Wälzlagers, insbesondere des ersten Ringelements oder des zweiten Ringelements, zu verstehen, mit der bzw. über die das Druckgas von außen in den Innenraum einleitbar ist. Beispielsweise handelt es sich bei dem Anschlusselement um eine Aussparung, eine Durchgangsbohrung, ein Schlauchstück oder eine Leitung.

Gemäß einer weiteren Ausführungsform der vorliegenden Erfindung ist vorgesehen, dass das Wälzlager derart ausgestaltet ist, dass das Dichtelement in einem ersten Zustand durch eine Rückstellkraft eines Federelements des Dichtelements am zweiten Ringelement und in einem zweiten Zustand durch das Druckgas am zweiten Ringelement anliegt. Dadurch lässt sich das Wälzlager, insbesondere bedarfsabhängig, in den zweiten Zustand überführen, wenn die Rückstellkraft des Federelements im ersten Zustand nicht mehr ausreicht, um für ein abdichtendes Andrücken zu sorgen. Beispielsweise handelt es sich bei dem Federelement um einen Drahtring, dessen Rückstellkraft radial nach innen gerichtet ist.

Gemäß einer weiteren Ausführungsform der vorliegenden Erfindung ist vorgesehen, dass das Dichtelement eine Dichtlippe aufweist, welche so angeordnet ist, dass sie durch das Druckgas im Innenraum gegen das zweite Ringelement drückbar ist. Beispielsweise handelt es sich bei der Dichtlippe um einen Teil einer Wellendichtung, die vom Rest des Dichtelements schräg absteht und, insbesondere in einer Ruhestellung, auf das zweite Ringelement gerichtet ist. Vorstellbar ist hierbei, dass ein Drahtring oder eine Schlauchfeder in die Dichtlippe integriert ist. Durch den abstehenden und auf das zweite Ringelement gerichteten Teil des Dichtelements, beispielsweise in Form der Dichtlippe, wird von dem Dichtelement eine Hinterschneidung bzw. ein Hohlbereich bereitgestellt, in den ein für das abdichtende Andrücken verantwortliche Druckgas eingeleitet werden kann. Infolge der Einleitung des Druckgases in den Hohlbereich lässt sich die Dichtlippe aus der Ruhestellung in die Dichtstellung verschwenken bzw. überführen.

Gemäß einer weiteren Ausführungsform der vorliegenden Erfindung ist vorgesehen, dass das zweite Ringelement gegenüber dem ersten Ringelement drehbar gelagert ist und eine Druckerzeugungsvorrichtung vorgesehen ist, mit der das Druckgas in das Wälzlager einleitbar ist, wobei die Druckerzeugungsvorrichtung in Fluidverbindung mit einem oder mehreren Anschlusselementen im ersten Ringelement und/oder im zweiten Ringelement steht. Vorzugsweise handelt es sich bei dem Anschlusselement um eine Aussparung. Hierbei ist es vorgesehen, dass das Druckgas außerhalb des Wälzlagers bereitgestellt wird und dann der Aussparung zugeleitet wird. Beispielsweise handelt es sich bei der Aussparung um eine Durchgangsbohrung in einer Seitenwand des ersten Ringelements. Denkbar ist auch, dass die Aussparungen umlaufend äquidistant zueinander am ersten Ringelement verteilt sind. Vorzugsweise handelt es sich bei der Druckerzeugungsvorrichtung um einen Kompressor mit dem das Druckgas der Aussparung über die Fluidverbindung bereitgestellt bzw. zugeleitet wird.

Erfindungsgemäß ist vorgesehen, dass das Wälzlager eine Regeleinrichtung zur Regelung des Druckgases aufweist. Mittels der Regeleinrichtung lässt sich in vorteilhafter Weise ein gewünschter Solldruck im Innenraum aufrechterhalten. Vorstellbar ist hierbei, dass die Regeleinrichtung eine Sensoreinheit, insbesondere einen Drucksensor, aufweist, die den aktuellen Druck im Innenraum erfasst. Beispielsweise umfasst die Regeleinrichtung ferner ein Pumpenelement, einen Kompressor oder einen von einem Kompressor gespeisten Druckspeicher, mit dem das Druckgas über die Aussparung in den Innenraum geleitet wird, um für einen möglichst konstanten Druck im Innenraum zu sorgen.

Gemäß einer weiteren Ausführungsform der vorliegenden Erfindung ist vorgesehen, dass im Betrieb innerhalb des Innenraums ein Überdruck von mehr als 0.2 bar, bevorzugt mehr als 0.3 bar und besonders bevorzugt von mehr als 0.4 bar herrscht. Beispielsweise wird unter Verwendung der Regeleinrichtung ein Sollwert für den Druck zwischen 0.2 und 0.6 bar eingestellt.

Ein weiterer Gegenstand der vorliegenden Erfindung ist eine Windkraftanlage mit einem erfindungsgemäßen Wälzlager. Beispielsweise handelt es sich um ein Wälzlager zur Lagerung des Rotors oder ein Schwenklager zur Blattlagerung eines einzelnen Rotorblatts.

Ein weiterer Gegenstand der vorliegenden Erfindung ist ein Verfahren zum Abdichten eines erfindungsgemäßen Wälzlagers oder eines Wälzlagers in einer erfindungsgemäßen Windkraftanlage mit den Merkmalen des Patentanspruchs 8. Dadurch lässt sich zur Aufrechterhaltung der Dichtung ein Spalt zwischen dem Dichtelement und dem zweiten Ringelement verschließen, wobei der Spalt durch die im Betrieb des Wälzlagers auftretende Lasten bzw. Belastungen verursacht wird. Durch das Druckgasventil lässt sich in vorteilhafter Weise ein unerwünschter Überdruck im Innenraum vermeiden, indem das Druckgasventil für einen im Innenraum herrschenden Überdruck unterhalb eines festgelegten kritischen Druckwerts verschlossen bleibt und der Innenraum entlüftet wird, sobald der Überdruck im Innenraum den kritischen Druckwert überschreitet. Dabei verschließt das Druckgasventil im Anschluss an einen durch das Entlüften veranlassten Druckabfall und es wird der gewünschte Sollwert für den Überdruck eingestellt. Das Druckgasventil ist derart gestaltet, dass in einem geöffneten Zustand des Druckgasventils neben entweichendem Gas auch ein Schmiermittel aus dem Innenraum austritt.

Gemäß einer weiteren Ausführungsform der vorliegenden Erfindung ist vorgesehen, dass die Beaufschlagung mit dem Druckgas im Betrieb des Wälzlagers für ein festgelegtes Zeitintervall unterbrochen wird. Insbesondere ist es vorgesehen, dass das Druckgas im Betrieb des Wälzlagers , insbesondere nur bei großen Betriebslasten, aufgebracht wird, und für ein festgelegtes Zeitintervall, insbesondere bei niedrigen Drehzahlen oder geringen Betriebslasten, unterbrochen wird. Dadurch lässt sich eine ausreichende Schmierung der Dichtlippe sicherstellen. Außerdem lässt sich ein übermäßiger Verschleiß der Dichtlippe durch einen erhöhten und dauerhaften Anpressdruck vermeiden. Hierbei ist es vorgesehen, dass nach dem festgelegten Zeitintervall das Druckgas, das Schmiermittel oder ein Gemisch aus dem Druckgas und dem Schmiermittel den Innenraum verlässt. Ferner ist es vorgesehen, dass nach einer festgelegten Unterbrechungszeit das Druckgas wieder in den Innenraum geleitet wird und so der gewünschte Solldruck im Innenraum erneut hergestellt wird.

Gemäß einer weiteren Ausführungsform der vorliegenden Erfindung ist vorgesehen, dass die Beaufschlagung mit dem Druckgas abhängig von einer einen Betriebszustand des Wälzlagers beschreibenden Kenngröße unterbrochen wird. Als Kenngröße kommt beispielsweise eine Leistungskenngröße, ein Schmiermittelverlustkenngröße oder eine Drehzahlkenngröße in Frage. Insbesondere ist es vorgesehen, dass das Lager erst dann mit einem vorgenannten Verfahren unter Druckgas betrieben wird, wenn die Dichtwirkung der Dichtung aufgrund von Verschleiß und/oder Alterung nachgelassen hat, wenn z. B. ein erhöhter Schmiermittelverlust durch eine Sensoreinheit, insbesondere eine Kamera oder ähnliches, detektiert wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

Die **Figur 1** zeigt eine Detailansicht eines Wälzlagers in verschiedenen Zuständen.
Die **Figur 2** zeigt eine Detailansicht eines Wälzlagers gemäß einer beispielhaften Ausführungsform der vorliegenden Erfindung.
Die **Figur 3** zeigt ein Druckgasventil für ein Wälzlager gemäß der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

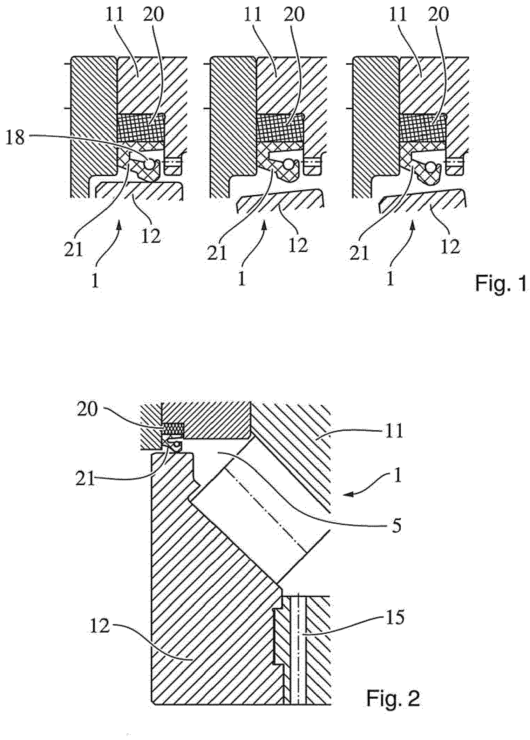

In **Figur 1** ist in einer Detailansicht ein Wälzlager 1 in verschiedenen Zuständen dargestellt. Hierbei handelt es sich beispielsweise um ein Wälzlager 1 für eine Windkraftanlage, wobei das Wälzlager z. B. zur Rotorlagerung vorgesehen ist. Bestandteile des Wälzlagers 1 sind ein erstes Ringelement 11 und ein zweites Ringelement 12, wobei das erste Ringelement 11 und das zweite Ringelement 12 zueinander um eine Drehachse drehbar gelagert sind. Beispielsweise handelt es sich bei dem ersten Ringelement 11 um einen Außenring bzw. einen Teil eines Außenrings und bei dem zweiten Ringelement 12 um einen Innenring oder andersherum. Zur Lagerung umfasst das Wälzlager 1 Wälzkörper, wie z.B. Rollen, Kugeln oder Kegel, die innerhalb eines Innenraums 5 zwischen dem ersten Ringelement 11 und dem zweiten Ringelement 12 angeordnet sind. Diese Wälzkörper sind derart innerhalb des Innenraums 5 angeordnet, dass sie jeweils mit einer Laufbahn am ersten Ringelement 11 und einer Laufbahn am zweiten Ringelement 12 in Kontakt stehen. Ferner ist es vorstellbar, dass neben den Wälzkörpern ein Käfigelement im Innenraum 5 angeordnet ist, wobei jeweils ein Wälzkörper in einer Aussparung des Käfigelements angeordnet ist. Für ein möglichst reibungsarmes Abwälzen der Wälzkörper über die Laufbahnen ist weiterhin ein Schmiermittel vorgesehen, dass den Innenraum 5 zwischen dem ersten Ringelement 11 und dem zweiten Ringelement 12 zumindest teilweise füllt. Um wiederum ein Heraustreten dieses Schmiermittels im Betrieb zu vermeiden, ist ein Dichtelement 20, wie z. B. eine Wellendichtung oder konkreter eine Ringwellendichtung, vorgesehen. In der linken Darstellung in Figur 1 ist eine Detailansicht des Wälzlagers 1 in einem Zustand unmittelbar nach der Fertigung dargestellt, in der eine Abdichtung des Innenraums 5 mit dem Dichtelement 20 sichergestellt werden kann. Hierzu ist das Dichtelement 20 mit einer Seite bzw. an einem Ende am ersten Ringelement 11 befestigt und derart ausgerichtet, dass ein abdichtender Kontakt zum zweiten Ringelement 12 mit einer anderen Seite bzw. einem anderen Ende des Dichtelements 20 besteht. Unterstützt wird diese Ausrichtung durch ein Federelement in Gestalt eines Drahtrings 18, der in das Dichtelement 20 integriert ist. Die in der Figur 2 dargestellte Ausführungsform umfasst als Dichtelement 20 eine Ringwellendichtung, die am anderen Ende bzw. an der anderen Seite des Dichtelements 20 eine Dichtlippe 21 aufweist, die wiederum am zweiten Ringelement 12 anliegt und in die der Drahtring 18 integriert ist. Die Abbildung in der Mitte der Figur 2 zeigt das Wälzlager 1 in einem verbauten Zustand, beispielsweise in einem in eine Windkraftanlage verbauten Zustand. Durch die hier auftretenden Lasten verschiebt sich das erste Ringelement 11 relativ zum zweiten Ringelement 12 derart, dass sich der Abstand zwischen dem ersten Ringelement 11 und dem zweiten Ringelement 12 vergrößert. Folge ist, dass das Dichtelement 20 den Abstand zwischen dem ersten Ringelement 11 und dem zweiten Ringelement 12 nicht länger überbrücken kann und somit die Abdichtung aufgehoben wird. Wie die Abbildung rechts in Figur 1 illustriert, vermag die dargestellte Ringwellendichtung auch nicht durch die Rückstellkraft des Federrings einen zwischen der Dichtlippe 21 und dem zweiten Ringelement 12 ausgebildeten Spalt zu schließen. In einer solchen Ruhestellung des Dichtelements bildet sich demnach ein Spalt zwischen dem Dichtelement 20 und dem zweiten Ringelement 12.

In der **Figur 2** ist eine Detailansicht eines Wälzlagers 1 gemäß einer beispielhaften Ausführungsform der vorliegenden Erfindung dargestellt. Hierbei wird in den Innenraum 5 zwischen dem ersten Ringelement 11 und dem zweiten Ringelement 12 ein Druckgas eingebracht. Der vom Druckgas erzeugte Druck und das Dichtelement 20 sind dabei derart ausgestaltet und ausgelegt, dass das Dichtelement 20 mit seinem anderen Ende bzw. der anderen Seite gegen das zweite Ringelement 12 gedrückt wird. In der dargestellten Ausführungsform sorgt das Druckgas im Innenraum 5 dafür, dass die Dichtlippe 21 aus einer im Betrieb ohne Druckgas eingenommenen Ruhestellung in eine Dichtstellung überführt wird. Beispielsweise liegt der mit dem Druckgas eingestellte Druck zwischen 0.2 und 0.6 bar. Zur Realisierung des Drucks im Innenraum 5 ist ein Anschlusselement, beispielsweise in Form einer Aussparung 15, insbesondere einer Bohrung bzw. Durchgangsbohrung, im ersten Ringelement 11 vorgesehen, wobei das erste Ringelement 11 im Betrieb des Wälzlagers 1 ortsfest angeordnet ist. Ferner ist eine (hier nicht dargestellte) Regeleinrichtung vorgesehen, mit deren Hilfe das Einleiten des Druckgases in den Innenraum 5 kontrollierbar ist bzw. gesteuert wird. Um den gewünschten Druck aufrechtzuerhalten bzw. zu erzeugen, wird das Druckgas, beispielsweise Luft, über das Anschlusselement in den Innenraum 5 eingeleitet. Hierzu wird das Druckgas extern, d. h. außerhalb des Wälzlagers 1, erzeugt und dann über das Anschlusselement dem Innenraum zugeleitet. Hierbei ist es vorstellbar, dass das Druckgas mit einem Kompressor erzeugt und in den Innenraum eingeleitet wird. In einer vorteilhaften Ausführungsform wird als Druckgas trockene Druckluft verwendet.

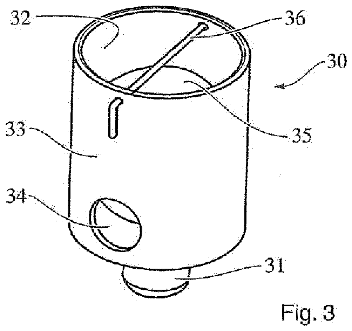

Um einen zu hohen Druck im Innenraum 5 zu vermeiden, ist erfindungsgemäß ein Druckgasventil 30 vorgesehen, wobei das Druckgasventil 30 im Kontakt mit dem Innenraum 5 steht. Beispielsweise umfasst das Druckgasventil 30 einen hülsenförmigen Grundkörper 33, einen Eingangsbereich 31 und einen Ausgangsbereich 32 sowie ein Blockierelement 35, das z. B. mit eine Feder oder durch die Schwerkraft in einer Blockierstellung gehalten wird, solange der Druck im Innenraum 5 einen kritischen Wert nicht überschreitet. In der Blockierstellung schließt das Blockierelement 35, das in Figur 3 als Kugel ausgestaltet ist, zusätzlich zum Eingangsbereich 31 eine Druckgasöffnung 34, die in der Seite des hülsenförmigen Grundkörpers 33 eingelassen ist. Sobald ein kritischer Überdruck im Innenraum 5 überschritten wird, wird das Blockierelement 35 aus der Blockierstellung in eine Öffnungsstellung überführt, in der das Blockierelement 35 die Druckgasöffnung 34 nicht länger blockiert und der Überdruck im Innenraum 5 über die Druckgasöffnung abgebaut werden kann. Um zu vermeiden, dass das Blockierelement 35 aus dem hülsenförmigen Grundkörper 33 herausfällt, weist das Druckgasventil 30 in seinem Ausgangsbereich 32 ein Bügelelement 36 auf, dass sich quer über die Öffnung am Ausgangsbereich 32 erstreckt. Für die in der Figur 2 dargestellte Ausführungsform ist es vorstellbar, dass das Druckgasventil 30 in eine der Aussparungen eingelassen ist, über die das Druckgas in den Innenraum 5 eingeleitet bzw. eingeblasen wird. Ein Beispiel für ein solches Druckgasventil 30 ist in Figur 3 dargestellt. Hierbei ist das Druckgasventil 30 derart ausgestaltet, dass es bis zu einem im Innenraum 5 herrschenden kritischen Druck verschlossen bleibt und bei einem Druck oberhalb des kritischen Drucks entlüftet. Hierbei ist das Druckgasventil 30 derart ausgestaltet bzw. im Wälzlager 1 derart angeordnet, dass in einem geöffneten Zustand des Druckgasventils 30 neben dem Druckgas auch Schmiermittel aus dem Innenraum 5 heraustritt. In einer vorteilhaften Ausführungsform wird das Schmiermittel, insbesondere mittels eines Trichters, aufgefangen und beispielsweise dem Innenraum 5 zur Wiederverwendung erneut zugeführt. Nach dem durch das Entlüften erzeugten Druckabfall verschließt das Druckgasventil 30 selbstständig und dichtet den Innenraum 5 wieder ab, wobei ein im Betrieb vorgesehener Überdruck erneut herbeigeführt wird.

Zur Sicherstellung einer ausreichenden Schmierung der Dichtlippe 21 und zur Vermeidung eines übermäßigen Verschleißes der Dichtlippe 21 durch einen erhöhten Anpressdruck, ist es in einer weiteren vorteilhaften Ausführungsform vorgesehen, dass eine Zufuhr des Druckgases für ein festgelegtes Zeitintervall unterbrochen wird, um so das Austreten des Druckgases und/oder des Schmiermittels aus dem Innenraum 5 zu ermöglichen. Anschließend wird nach einer festgelegten Unterbrechungszeit das Druckgas wieder eingeleitet und der gewünschte Überdruck erneut hergestellt.

### Bezugszeichenliste

1 Wälzlager
5 Innenraum
11 erstes Ringelement
12 zweites Ringelement
15 Aussparung
18 Drahtring
20 Dichtelement
21 Dichtlippe
30 Druckgasventil
31 Eingangsbereich
32 Ausgangsbereich
33 Grundkörper
34 Druckgasöffnung
35 Blockierelement
36 Bügelelement

## Patentansprüche

1. Wälzlager (1) mit einem ersten Ringelement (11) und einem zweiten Ringelement (12), wobei ein am ersten Ringelement (11) befestigtes Dichtelement (20) zum Abdichten eines Innenraums (5) zwischen dem ersten Ringelement (11) und dem zweiten Ringelement (12) vorgesehen ist, wobei das Wälzlager (1) derart ausgebildet ist, dass der Innenraum (5) während des Betriebs des Wälzlagers (1) zum abdichtenden Andrücken wenigstens eines Teils des Dichtelements (20) gegen das zweite Ringelement (12) mit einem Druckgas beaufschlagbar ist, und wobei das Wälzlager (1) eine Regeleinrichtung zur Regelung des Druckgases im Innenraum (5) aufweist, **dadurch gekennzeichnet, dass** das Wälzlager (1) ein in Wirkverbindung mit dem Innenraum (5) stehendes Druckgasventil (30) aufweist, wobei das Druckgasventil (30) derart gestaltet ist, dass in einem geöffneten Zustand des Druckgasventils (30) neben entweichendem Gas auch ein Schmiermittel aus dem Innenraum (5) austritt.

2. Wälzlager (1) gemäß Anspruch 1, wobei das Wälzlager (1) wenigstens ein Anschlusselement zur Einleitung von Druckgas aufweist.

3. Wälzlager (1) gemäß einem der vorhergehenden Ansprüche, wobei das Wälzlager (1) derart ausgestaltet ist, dass das Dichtelement (20) in einem ersten Zustand durch eine Rückstellkraft eines Federelements des Dichtelements (20) am zweiten Ringelement (12) und in einem zweiten Zustand durch das Druckgas am zweiten Ringelement (12) anliegt.

4. Wälzlager (1) gemäß einem der vorhergehenden Ansprüche, wobei das Dichtelement (20) eine Dichtlippe (21) aufweist, welche so angeordnet ist, dass sie durch das Druckgas im Innenraum (5) gegen das zweite Ringelement (12) drückbar ist.

5. Wälzlager (1) gemäß einem der vorhergehenden Ansprüche, wobei das zweite Ringelement (12) gegenüber dem ersten Ringelement (11) drehbar gelagert ist und eine Druckerzeugungsvorrichtung vorgesehen ist, mit der das Druckgas in das Wälzlager (1) einleitbar ist, wobei die Druckerzeugungsvorrichtung in Fluidverbindung mit einer oder mehreren Anschlusselementen im ersten Ringelement (11) und/oder im zweiten Ringelement (12) steht.

6. Wälzlager (1) gemäß einem der vorhergehenden Ansprüche, wobei im Betrieb innerhalb des Innenraums (5) ein Überdruck von mehr als 0.2 bar, bevorzugt mehr als 0.3 bar und besonders bevorzugt von mehr als 0.4 bar herrscht.

7. Windkraftanlage mit einem Wälzlager (1) gemäß einem der vorhergehenden Ansprüche.

8. Verfahren zum Abdichten eines Wälzlagers (1) gemäß einem der Ansprüche 1 bis 6 oder eines Wälzlagers (1) in einer Windkraftanlage gemäß Anspruch 7, wobei während des Betriebs des Wälzlagers (1) der Innenraum (5) zumindest zeitweise mit einem Druckgas beaufschlagt wird, durch das im Betrieb des Wälzlagers (1) zumindest ein Teil des Dichtelements (20) gegen das zweite Ringelement (12) abdichtend angedrückt wird, und wobei zur Vermeidung eines zu hohen Druckes im Innenraum (5) ein mit dem Innenraum (5) in Kontakt stehendes Druckgasventil (30) vorgesehen ist, welches bis zu einem im Innenraum (5) herrschenden kritischen Druck verschlossen bleibt und bei einem Druck oberhalb des kritischen Drucks entlüftet, wobei das Druckgasventil (30) derart gestaltet ist, dass in einem geöffneten Zustand des Druckgasventils (30) neben dem Druckgas auch Schmiermittel aus dem Innenraum (5) heraustritt, und wobei nach dem durch das Entlüften erzeugten Druckabfall das Druckgasventil (30) selbstständig verschließt und den Innenraum (5) wieder abdichtet.

9. Verfahren gemäß Anspruch 8, wobei die Beaufschlagung mit dem Druckgas im Betrieb des Wälzlagers (1) für ein festgelegtes Zeitintervall unterbrochen wird.

10. Verfahren gemäß Anspruch 9, wobei die Beaufschlagung mit dem Druckgas abhängig von einer einen Betriebszustand des Wälzlagers beschreibenden Kenngröße unterbrochen wird.

## Claims

1. Rolling bearing (1) having a first ring element (11) and a second ring element (12), wherein a sealing element (20) fastened to the first ring element (11) is provided for sealing an interior (5) between the first ring element (11) and the second ring element (12), wherein the rolling bearing (1) is designed in such a way that during the operation of the rolling bearing (1), the interior (5) can be charged with a compressed gas in order to press at least part of the sealing element (20) against the second ring element (12) in a sealing manner, and wherein the rolling bearing (1) has a control device for controlling the compressed gas in the interior (5), **characterized in that** the rolling bearing (1) has a compressed-gas valve (30) in operative connection with the interior (5), wherein the compressed-gas valve (30) is configured in such a way that, with the compressed-gas valve (30) in an open state, not only escaping gas but also a lubricant can exit the interior (5).

2. Rolling bearing (1) according to Claim 1, wherein the rolling bearing (1) has at least one connection element for introducing compressed gas.

3. Rolling bearing (1) according to either of the preceding claims, wherein the rolling bearing (1) is configured in such a way that, in a first state, the sealing element (20) lies against the second ring element (12) by means of a restoring force of a spring element of the sealing element (20), and, in a second state, lies against the second ring element (12) by means of the compressed gas.

4. Rolling bearing (1) according to one of the preceding claims, wherein the sealing element (20) has a sealing lip (21) which is arranged in such a way that it can be pressed against the second ring element (12) by means of the compressed gas in the interior (5).

5. Rolling bearing (1) according to one of the preceding claims, wherein the second ring element (12) is mounted so as to be rotatable with respect to the first ring element (11), and a pressure-generating device is provided by means of which the compressed gas can be introduced into the rolling bearing (1), wherein the pressure-generating device is fluidically connected to one or more connection elements in the first ring element (11) and/or in the second ring element (12).

6. Rolling bearing (1) according to one of the preceding claims, wherein, during operation, an overpressure of more than 0.2 bar, preferably more than 0.3 bar and particularly preferably of more than 0.4 bar, prevails within the interior (5).

7. Wind turbine having a rolling bearing (1) according to one of the preceding claims.

8. Method for sealing a rolling bearing (1) according to one of Claims 1 to 6 or for sealing a rolling bearing (1) in a wind turbine according to Claim 7, wherein, during the operation of the rolling bearing (1), the interior (5) is charged at least intermittently with a compressed gas by means of which, during operation of the rolling bearing (1), at least part of the sealing element (20) is pressed against the second ring element (12) in a sealing manner, and wherein, to avoid an excessive pressure in the interior (5), there is provided a compressed-gas valve (30) which is in contact with the interior (5), remains closed up to a critical pressure prevailing in the interior (5) and vents at a pressure above the critical pressure, wherein the compressed-gas valve (30) is configured in such a way that, with the compressed-gas valve (30) in an open state, not only the compressed gas but also lubricant exit the interior (5), and wherein, subsequent to the pressure drop generated by the venting, the compressed-gas valve (30) automatically closes and seals the interior (5) again.

9. Method according to Claim 8, wherein, during the operation of the rolling bearing (1), the charging with the compressed gas is interrupted for a fixed time interval.

10. Method according to Claim 9, wherein the charging with the compressed gas is interrupted in dependence on a characteristic describing an operating state of the rolling bearing.

## Revendications

1. Palier à roulement (1), comprenant un premier élément annulaire (11) et un deuxième élément annulaire (12), dans lequel un élément d'étanchéité (20) fixé au premier élément annulaire (11) est prévu pour assurer l'étanchéité d'un espace intérieur (5) entre le premier élément annulaire (11) et le deuxième élément annulaire (12), le palier à roulement (1) étant réalisé de telle sorte que l'espace intérieur (5) peut être mis sous pression par un gaz sous pression pendant le fonctionnement du palier à roulement (1) pour presser au moins une partie de l'élément d'étanchéité (20) contre le deuxième élément annulaire (12) de manière à assurer l'étanchéité, et le palier à roulement (1) présentant un dispositif de régulation pour réguler le gaz sous pression dans l'espace intérieur (5), **caractérisé en ce que** le palier à roulement (1) présente une soupape à gaz sous pression (30) qui se trouve en relation fonctionnelle avec l'espace intérieur (5), la soupape à gaz sous pression (30) étant configurée de telle sorte que dans un état ouvert de la soupape à gaz sous pression (30), en plus d'un gaz qui s'échappe, un lubrifiant sort également de l'espace intérieur (5).

2. Palier à roulement (1) selon la revendication 1, le palier à roulement (1) présentant au moins un élément de raccordement pour introduire du gaz sous pression.

3. Palier à roulement (1) selon l'une quelconque des revendications précédentes, le palier à roulement (1) étant configuré de telle sorte que dans un premier état, l'élément d'étanchéité (20) s'applique contre le deuxième élément annulaire (12) par une force de rappel d'un élément faisant ressort de l'élément d'étanchéité (20), et dans un deuxième état, il s'applique contre le deuxième élément annulaire (12) par le gaz sous pression.

4. Palier à roulement (1) selon l'une quelconque des revendications précédentes, dans lequel l'élément d'étanchéité (20) présente une lèvre d'étanchéité (21) qui est disposée de telle sorte qu'elle peut être pressée contre le deuxième élément annulaire (12) par le gaz sous pression dans l'espace intérieur (5).

5. Palier à roulement (1) selon l'une quelconque des revendications précédentes, dans lequel le deuxième élément annulaire (12) est monté pivotant par rapport au premier élément annulaire (11), et un dispositif de génération de pression est prévu qui permet d'introduire le gaz sous pression dans le palier à roulement (1), le dispositif de génération de pression étant en communication fluidique avec un ou plusieurs éléments de raccordement dans le premier élément annulaire (11) et/ou dans le deuxième élément annulaire (12) .

6. Palier à roulement (1) selon l'une quelconque des revendications précédentes, dans lequel, en cours de fonctionnement, il règne à l'intérieur de l'espace intérieur (5) une surpression supérieure à 0,2 bar, de préférence supérieure à 0,3 bar, et de façon particulièrement préférée supérieure à 0,4 bar.

7. Eolienne comprenant un palier à roulement (1) selon l'une quelconque des revendications précédentes.

8. Procédé permettant d'assurer l'étanchéité d'un palier à roulement (1) selon l'une quelconque des revendications 1 à 6 ou d'un palier à roulement (1) dans une éolienne selon la revendication 7, dans lequel, pendant le fonctionnement du palier à roulement (1), l'espace intérieur (5) est mis sous pression au moins temporairement par un gaz sous pression qui presse en cours de fonctionnement du palier à roulement (1) au moins une partie de l'élément d'étanchéité (20) contre le deuxième élément annulaire (12) pour assurer l'étanchéité, et dans lequel, pour éviter une pression trop élevée dans l'espace intérieur (5), une soupape à gaz sous pression (30) en contact avec l'espace intérieur (5) est prévue qui reste fermée jusqu'à une pression critique régnant dans l'espace intérieur (5), et qui procède à une purge à une pression au-dessus de la pression critique, la soupape à gaz sous pression (30) étant configurée de telle sorte que dans un état ouvert de la soupape à gaz sous pression (30), en plus du gaz sous pression, du lubrifiant sort également de l'espace intérieur (5), et dans lequel, après la chute de pression générée par la purge, la soupape à gaz sous pression (30) se ferme automatiquement et assure à nouveau l'étanchéité de l'espace intérieur (5).

9. Procédé selon la revendication 8, dans lequel la mise sous pression par le gaz sous pression en cours de fonctionnement du palier à roulement (1) est interrompue pendant un intervalle de temps fixe.

10. Procédé selon la revendication 9, dans lequel la mise sous pression par le gaz sous pression est interrompue en fonction d'une grandeur caractéristique décrivant un état de fonctionnement du palier à roulement.
